# EUROPÄISCHE PATENTANMELDUNG

(11) **EP 2 618 255 A1**
(43) Veröffentlichungstag der Anmeldung: **24.07.2013**
(21) Anmeldenummer: 12151986.2
(22) Anmeldetag: 20.01.2012
(51) Int. Cl.: G06F 9/44

(54) **Elektronisches Gerät zur Installation von Abbildern**

(71) Anmelder: Siemens Aktiengesellschaft, 80333 München (DE)
(72) Erfinder: Gander, Patrik, 76870 Kandel (DE); Giraud, Rene, 76344 Eggenstein-Leopoldshafen (DE)

(57) **Zusammenfassung**

Die Erfindung betrifft ein elektronisches Gerät, welches dazu ausgebildet ist, in einer Aufzeichnungs-Betriebsart Abbilder (3 bis 5) von optischen Speichermedien mit Installations-Software für Datenverarbeitungsgeräte (6) auf ein Speichermedium (2) des elektronischen Gerätes (1) zu hinterlegen und einem Bediener anzuzeigen, welche Abbilder (3 bis 5) hinterlegt sind, und ferner dazu ausgebildet ist, in einer Installations-Betriebsart bei Auswahl eines der hinterlegten Abbilder (3 bis 5) durch den Bediener dieses Abbild (3 bis 5) für das jeweilige an das elektronische Gerät (1) über eine USB-oder eine ESATA-Schnittstelle angeschlossene Datenverarbeitungsgerät (6) für die Software-Installation bereitzustellen. Für einen Service-Techniker wird dadurch die Installation von Software bzw. Programmen auf Datenverarbeitungsgeräte (6) erleichtert und ein umständliches "Handling" von Installations-Speichermedien vermieden.

## Beschreibung

Die Erfindung betrifft ein elektronisches Gerät, welches dazu ausgebildet ist, in einer Aufzeichnungs-Betriebsart Abbilder von optischen Speichermedien mit Installations-Software für Datenverarbeitungsgeräte 6 auf ein Speichermedium des elektronischen Gerätes zu hinterlegen und einem Bediener anzuzeigen, welche Abbilder hinterlegt sind, und welches ferner dazu ausgebildet ist, in einer Installations-Betriebsart bei Auswahl eines der hinterlegten Abbilder durch den Bediener dieses Abbild für das jeweilige an das elektronische Gerät über eine USB- oder eine ESATA-Schnittstelle angeschlossene Datenverarbeitungsgerät für die Software-Installation bereitzustellen.

Aus dem Siemens-Katalog ST 80, Kapitel 5, Ausgabe 2011 sind Datenverarbeitungsgeräte in Form von so genannten Industrie-PCs bekannt, die mit unterschiedlichen Betriebssystemen betreibbar sind. Die Installation dieser Betriebssysteme auf diese Industrie-PCs sowie die Installation weiterer Programme, beispielsweise Programme in Form von Anwender-, Steuer-, Dienstprogrammen, oder sonstigen geeigneten Utilities ist zeitaufwendig, wobei für den Service-Techniker das "Handling" der Vielzahl von Installations-Datenträgern in Form von Compact Discs (CDs), Digital Versatile Discs (DVDs) oder Bluray Discs (BDs) für die verschiedenen Industrie-PCs umständlich und zeitaufwendig ist. Insbesondere müssen die verschiedenen Datenträger entsprechend gekennzeichnet und verwaltet werden, um z. B. nach der Reparatur des Speichermediums eines Industrie-PCs auf diesen PC nicht versehentlich Programme aufzuspielen, die für diesen PC gar nicht vorgesehen sind.

Der Erfindung liegt daher die Aufgabe zugrunde, ein elektronisches Gerät zu schaffen, mittels welchem einem Service-Techniker die Installation von Programmen auf Datenverarbeitungsgeräte erleichtert wird.

Diese Aufgabe wird durch die im Anspruch 1 angegebenen Maßnahmen gelöst.

Vorteilhaft ist, dass mittels eines derartigen elektronischen Gerätes die Installation der jeweiligen "Abbild-basierenden" Daten auf das jeweilige Datenverarbeitungsgerät, beispielsweise ein Datenverarbeitungsgerät in Form eines Industrie-PCs, eines Notebooks, eines Tablets oder Standard-PCs vereinfacht wird, ein umständliches "Handling" von Installations-Speichermedien bzw. Speichermedien mit Installations-Software (Installations-Programmen) wird vermieden und darüber hinaus die Performance im Hinblick auf die Verfügbarkeit der Datenverarbeitungsgeräte deutlich verbessert. Unter Abbild wird in diesem Zusammenhang eine Abbilddatei eines optischen Speichermediums verstanden, welche alle Informationen dieses Speichermediums inklusive dessen Dateisystem-Struktur und ggf. dessen "Master Boot Record" (MBR) umfasst. Mittels dieser Abbilddatei ist die Reproduzierbarkeit des Original-Speichermediums bzw. -Datenträgers möglich, wobei Kopierschutzmechanismen des Original-Speichermediums erhalten bleiben. Einem Bediener, einem Anwender oder einem Service-Techniker steht somit ein virtuelles optisches Speichermedium bzw. Speicherlaufwerk zur Verfügung, welches zur Installation von Programmen vorgesehen ist.

Während der Aufzeichnungs-Betriebsart verhält sich das Gerät wie ein USB- oder ESATA-Datenträger, auf welchen Abbilder von optischen Speichermedien in Form von CDs, DVDs oder BDs hinterlegt werden. Die Abbilder dieser optischen Speichermedien sind z. B. auf einem Server hinterlegt, welcher die Abbilder dem elektronischen Gerät zum Abspeichern auf dessen Speichermedium übermittelt.

In einer Installations- bzw. "Player"-Betriebsart arbeitet das Gerät als CD-, DVD- oder BD-Player, wobei ein ausgewähltes Abbild für ein angeschlossenes Datenverarbeitungsgerät bereitgestellt bzw. freigeschaltet wird und sich das elektronische Gerät als "optisches Laufwerk" dem Datenverarbeitungsgerät präsentiert.

In einer Ausgestaltung der Erfindung gemäß den im Anspruch 2 angegebenen Maßnahmen ist vorgesehen, dass das elektronische Gerät ein Touch-Screen zum Anzeigen und Auswählen eines der Abbilder aufweist. Dem Service-Techniker wird dadurch die Auswahl eines Abbildes für ein angeschlossenes Datenverarbeitungsgerät vereinfacht. Eine Vielzahl von Abbildern von Installations-Datenträgern wird dem Service-Techniker auf der Anzeige dargestellt, wobei der Service-Techniker z. B. über eine Toucheingabe das für das angeschlossene Datenverarbeitungsgerät vorgesehene Abbild zur Installation auf diesem Datenverarbeitungsgerät auswählt.

In einer weiteren Ausgestaltung der Erfindung ist das Gerät mit einem integrierten USB-HUB versehen, wodurch mehrere virtuelle Speichermedien verwirklicht werden.

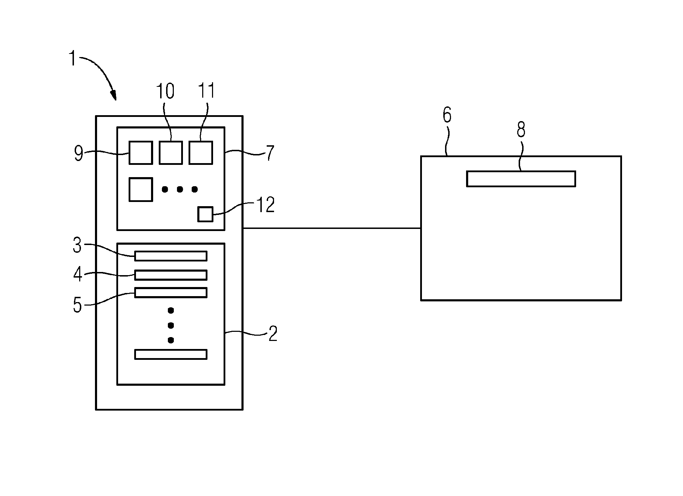

Die Erfindung wird nachfolgend anhand eines Ausführungsbeispiels unter Bezugnahme auf die einzige Figur der Zeichnung näher erläutert. Die Figur der Zeichnung zeigt in vereinfachter Form eine Anordnung mit einem elektronischen Gerät und einem Industrie-PC.

Mit 1 ist ein elektronisches Gerät bezeichnet, in welchem in Bereichen eines Speichers 2 eine Vielzahl von Abbildern 3 bis 5 von Installations-Speichermedien für Industrie-PCs hinterlegt sind. Beispielsweise ist das Abbild 3 ein Abbild einer DVD, auf welcher ein Setup-Programm und alle erforderlichen Dateien, z. B. DLL-Dateien, zur Installation eines ersten Betriebssystems für Industrie-PCs oder für sonstige Datenverarbeitungsgeräte gespeichert sind. Das Abbild 4 repräsentiert z. B. ein Abbild von mehreren Installations-CDs, auf denen jeweils Teile zur Installation eines zweiten Betriebssystems für derartige Industrie-PCs oder Datenverarbeitungsgeräte hinterlegt sind, und das Abbild 5 stellt ein Abbild einer BD dar, auf welcher ein Programm zur Installation von Dienst-oder Anwenderprogrammen gespeichert ist. Selbstverständlich können im Speicher 2 weitere Abbilder, z. B. ein Abbild einer Festplatte eines Industrie-PCs, hinterlegt sein, wobei dieses Abbild einen älteren Zustand dieses Industrie-PCs repräsentiert, wodurch der Industrie-PC auf diesen älteren Zustand zurückgesetzt werden kann.

Die Abbilder 3 bis 5 können über einen hier nicht dargestellten, mit dem Gerät 1 drahtlos verbundenen Server in den Speicher 2 hinterlegt werden. Selbstverständlich kann das Gerät 1 zur Informationsübertragung auch über eine Bus- oder eine USB-Verbindung an den Server angeschlossen sein, wobei zur Hinterlegung der Abbilder 3 bis 5 das Gerät 1 in eine Aufzeichnungs-Betriebsart geschaltet ist. Das Gerät 1 kann in diese Aufzeichnungs-Betriebsart geschaltet werden, indem ein Bediener oder Service-Techniker eine Umschalttaste in Form einer Fläche 12 eines Berührungsbildschirms 7 (Touch-Screen) des Gerätes 1 berührt, wobei mittels dieser Fläche 12 die aktuelle Betriebsart des Gerätes 1 dem Service-Techniker angezeigt wird. Die Hinterlegung kann auch in der Art und Weise bewerkstelligt werden, dass die Installations-Speichermedien in ein geeignetes Speicherlaufwerk des Gerätes 1 eingelegt werden, das Gerät 1 von diesen Speichermedien jeweils ein Abbild erzeugt und schließlich die Abbilder in Bereiche des Speichers 2 abspeichert.

Für den Fall, dass die gewünschten Abbilder 3 bis 5 in dem Gerät 1 hinterlegt sind, ist dieses vorbereitet, mindestens eines dieser Abbilder 3 bis 5 bei Bedarf für einen Industrie-PC 6 freizuschalten, um auf diesem Industrie-PC 6 die entsprechenden Installationen in Bereiche eines Speichermediums, z. B. auf einer Festplatte zu bewerkstelligen. Dazu wird das Gerät 1 über eine USB-Schnittstelle des Gerätes 1 und des Industrie-PCs 6 und ein USB-Kabel verbunden und das Gerät 1 in eine Installations-Betriebsart geschaltet, wobei dazu der Service-Techniker die Umschalttaste - also die Berührfläche 12 - berührt. Dem Service-Techniker wird nach dem Einschalten dieser Betriebsart auf dem Berührungsbildschirm 7 angezeigt, welche Abbilder 3 bis 5 auf dem Gerät 1 hinterlegt sind und ausgewählt werden können. Dazu sind jedem Abbild 3 bis 5 jeweils eine Anzeige- und Berührfläche 9 bis 11 zugeordnet, wobei in menschenlesbarer Form dem Service-Techniker angezeigt wird, welche Fläche 9 bis 11 welchem Abbild 3 bis 5 zugeordnet ist, und wobei der Service-Techniker durch Berührung einer der Flächen 9 bis 11 bewirkt, dass das dieser Fläche 9 bis 11 zugeordnete Abbild aktiviert bzw. freigeschaltet wird. Ein derartig freigeschaltetes Abbild bewirkt, dass der Industrie-PC 6 auf das Abbild zugreift und beispielsweise aufgrund einer im Abbild hinterlegten "Autorun"-Funktion Programme oder Dateien des Abbilds automatisch sucht bzw. Programme startet.

Im Folgenden wird angenommen, dass für den Industrie-PC 6 das Abbild 3 vorgesehen ist, was bedeutet, dass auf diesem Industrie-PC 6 das erste Betriebssystem in die entsprechenden Bereiche einer Festplatte 8 dieses Industrie-PCs zu installieren ist. Der Service-Techniker berührt dazu eine Anzeigefläche 9 des Berührungsbildschirms 7, wodurch automatisch ein auf dem Abbild gespeichertes Set-Up-Programm zur Installation des ersten Betriebsystems gestartet wird.

Für den Fall, dass mehrere Abbilder für das Gerät 1 vorgesehen sind, so werden die entsprechenden Aktionen in der Reihenfolge der Berührung der Flächen 9 bis 11 ausgeführt.

Um z. B. dem Industrie-PC 6 zwei virtuelle optische Laufwerke bzw. Speichermedien bereitzustellen, ist das Gerät 1 mit einem hier nicht dargestellten USB-HUB versehen, wobei beispielsweise ein Abbild ein CD-Speichermedium und ein weiteres Abbild ein DVD-Speichermedium repräsentiert.

Damit lässt sich die Erfindung wie folgt zusammenfassen: Ein elektronisches Gerät ist dazu ausgebildet, in einer Aufzeichnungs-Betriebsart Abbilder 3, 4, 5 von optischen Speichermedien mit Installations-Software für Datenverarbeitungsgeräte 6 auf ein Speichermedium 2 des elektronischen Gerätes 1 zu hinterlegen und einem Bediener anzuzeigen, welche Abbilder 3, 4, 5 hinterlegt sind, und ist ferner dazu ausgebildet, in einer Installations-Betriebsart bei Auswahl eines der hinterlegten Abbilder 3, 4, 5 durch den Bediener dieses Abbild 3, 4, 5 für das jeweilige an das elektronische Gerät 1 über eine USB- oder eine ESATA-Schnittstelle angeschlossene Datenverarbeitungsgerät 6 für die Software-Installation bereitzustellen. Mittels derartiger Maßnahmen wird einem Service-Techniker die Installation von Programmen auf Datenverarbeitungsgeräte 6 erleichtert.

## Patentansprüche

1. Elektronisches Gerät, welches dazu ausgebildet ist,
- in einer Aufzeichnungs-Betriebsart Abbilder (3 bis 5) von optischen Speichermedien mit Installations-Software für Datenverarbeitungsgeräte (6) auf ein Speichermedium (2) des elektronischen Gerätes (1) zu hinterlegen und einem Bediener anzuzeigen, welche Abbilder (3 bis 5) hinterlegt sind, und
- in einer Installations-Betriebsart bei Auswahl eines der hinterlegten Abbilder (3 bis 5) durch den Bediener dieses Abbild (3 bis 5) für das jeweilige an das elektronische Gerät (1) über eine USB- oder eine ESATA-Schnittstelle angeschlossene Datenverarbeitungsgerät (6) für die Software-Installation bereitzustellen.

2. Elektronisches Gerät nach Anspruch 1, **dadurch gekennzeichnet, dass** das Gerät (1) ein Touch-Screen (7) zum Anzeigen und Auswählen der Abbilder (3 bis 5) aufweist.

3. Elektronisches Gerät nach Anspruch 1 oder 2, **dadurch gekennzeichnet, dass** das Gerät (1) mit einem USB-HUB versehen ist.
